# EUROPÄISCHE PATENTANMELDUNG

(11) **EP 1 767 346 A1**
(43) Veröffentlichungstag der Anmeldung: **28.03.2007**
(21) Anmeldenummer: 05405560.3
(22) Anmeldetag: 27.09.2005
(51) Int. Cl.: B32B 27/32

(54) **Bedrucktes thermoformbares Laminat mit erhöhter Fälschungssicherheit**

(71) Anmelder: Alcan Technology & Management Ltd., 8212 Neuhausen am Rheinfall (CH)
(72) Erfinder: Pasbrig, Erwin, 78224 Singen (DE)

(57) **Zusammenfassung**

Bei einem bedruckten thermoformbaren Laminat aus wenigstens zwei Kunststofffolien ist die Bedruckung zur Erhöhung der Fälschungssicherheit innerhalb des Laminates zwischen Kunststofffolien angeordnet. Bevorzugte Laminate weisen folgenden Aufbau auf:
- Folie A / Druck / Kaschiermittel / Folie C
- Folie A / Druck / Kaschiermittel / Folie B / Kaschiermittel / Folie C
- Folie A / Druck / Kaschiermittel / Folie B/ Kaschiermittel / Druck / Folie C

## Beschreibung

Die Erfindung betrifft ein bedrucktes thermoformbares Laminat aus wenigstens zwei Kunststofffolien.

Thermoformbare Kunststofflaminate können vor oder nach dem Umformen zur Kundeninformation bedruckt werden. Das Bedrucken der Laminate vor dem Thermoformen zu Behältern bzw. Bechern erfolgt überwiegend auf der Behälterwandung mit den gängigen Druckverfahren. Wird das Kunststofflaminat vor dem Thermoformen bedruckt, kann sich die Bedruckung während der Umformung oder bei der Logistik wegen verminderter Haftung der Druckfarben zum Untergrund, in Abhängigkeit vom Umformgrad, mehr oder weniger von der Laminatoberfläche lösen.

In beiden Fällen der herkömmlichen Bedruckung befindet sich der Druck auf der die Aussenseite der Verpackung bildenden Laminatoberfläche und ist damit Fälschungen leicht zugänglich, indem der Druck von der Verpackung entfernt werden. und durch Aufdrucken neuer Informationen leicht ersetzt werden kann.

Bei Verwendung vorbedruckter Laminate besteht ebenfalls die Möglichkeit, dass diese auch von Fälschern hergestellt werden können, da Kunststofffolien und Laminate aus Kunststofffolien fast unbeschränkt auf dem Markt verfügbar sind.

Der Erfindung liegt die Aufgabe zugrunde, ein thermoformbares Laminat der eingangs genannten Art so mit einer Bedruckung zu versehen, dass sich im Vergleich zu den bedruckten thermoformbaren Laminaten nach dem Stand der Technik eine wesentlich höhere Fälschungssicherheit ergibt.

Zur erfindungsgemässen Lösung der Aufgabe führt, dass die Bedruckung zur Erhöhung der Fälschungssicherheit zwischen aneinandergrenzenden Kunststofffolien angeordnet ist.

Für die erfindungsgemässen Laminate sind die folgenden Aufbauten bevorzugt:
- Folie A / Druck / Kaschiermittel / Folie C
- Folie A / Druck / Kaschiermittel / Folie B / Kaschiermittel / Folie C
- Folie A / Druck / Kaschiermittel / Folie B/ Kaschiermittel / Druck / Folie C

Die Folien A, B und C sind thermoformbare Kunststofffolien auf Basis von chlorierten Kohlenwasserstoffen, wie Polyvinylchlorid und Polyvinylidenchlorid, Chlor-Fluor-Kohlenwasserstoffen, z. B. ACLAR^{©}, Polyolefinen, Polyethylenterephthalaten, Polyacrylnitrilen, z.- B. BAREX^{©}, Cycloolefin-Copolymeren, Cycloolefin-Polymeren, Polysulfonen oder biologisch abbaubaren Kunststoffen, oder Kombinationen dieser Kunststofffolien im Laminat. PVDC kann Folie oder Beschichtung sein.

Die Gesamtdicke der Laminate liegt bei 150 bis 500 µm, bei PVC/PE-Laminaten auch bei 90 bis 150 µm.

Die Kaschierung erfolgt mit Kaschierklebern auf wässriger Basis, mit lösemittelbasierten, lösemittelfreien und /oder durch Extrusionskaschierung als Mono- oder Coextrusion. Bei COC bzw. COP Laminaten mit PE oder PP empfiehlt sich eine Lackkaschierung oder auch die Herstellung eines Teillaminates durch Coextrusion.

Die Verbundhaftung der einzelnen Schichten soll mindestens 2 N/15 mm betragen.

Bei Verwendung von gefärbten Folien für die Bedruckung kann durch entsprechende Farbwahl die Farbe des Druckbildes verändert werden. Beispielsweise führt eine blaue Bedruckung einer gelb gefärbten Folie zu einem grün erscheinenden Druckbild. Mit derartigen Farbkombinationen lässt sich die Fälschungssicherheit bedruckter Laminate weiter erhöhen.

In Tabelle 1 sind die für die erfindungsgemässen Laminate bevorzugten Folienkombinationen zusammengestellt. Die Kurzbezeichnungen der den Folien zugrunde liegenden Kunststoffe bedeuten:
- PVC: Polyvinylchlorid
- PVDC: Polyvinylidenchlorid
- PAN: Polyacrylnitril
- PE: Polyethylene verschiedener Dichte, einschliesslich der Metallozene
- PP: Polypropylene, einschliesslich der Metallozene
- COC: Cycloolefin-Copolymer
- COP: Cycloolefin-Polymer
- PSU: Polysulfon
- PCTFE: Polychlortrifluorethylen
- EVOH: Ethylenvinylalkohol
- PGA: Polyglycolsäure

Ein bevorzugtes Anwendungsgebiet des erfindungsgemässen thermoformbaren Laminates sind aus dem Laminat thermogeformte Behälter, insbesondere Blisterbodenteile, oder Becher, vorzugsweise zur Verpackung von pharmazeutischen und medizinischen Produkten.

**Tabelle 1: Bevorzugte Laminataufbauten**

| **Laminat Nr.** | **Folie A** | **Folie B** | **Folie C** |
|---|---|---|---|
| 1 | PVC | | PVC |
| 2 | PVC | | PCTFE |
| 3 | PVC | | PAN |
| 4 | PVC | | PE |
| 5 | PVC | | PVDC |
| 6 | PVC | | COC oder COP |
| 7 | PVC | PVC | PVC |
| 8 | PVC | PCTFE | PVC |
| 9 | PVC | PAN | PVC |
| 10 | PVC | EVOH oder PGA | PVC |
| 11 | PVC | PE | PVC |
| 12 | PVC | PE | PVDC |
| 13 | PVC | COC oder COP | PVC |
| 14 | PVC | COC oder COP | PP |
| 15 | PVC | COC oder COP | PVDC |
| 16 | PVC | COC oder COP | PCTFE |
| 17 | PVC | COC oder COP | PAN |
| 18 | PVC | PVC | PE |
| 19 | PP | | PP |
| 20 | PP | | PCTFE |
| 21 | PP | | PVDC |
| 22 | PP | | COC oder COP |
| 23 | PP | PCTFE | PP |
| 24 | PP | EVOH oder PGA | PP |
| 25 | PP | COC oder COP | PP |
| 26 | PP | PAN | PP |
| 27 | PP | COC oder COP | PVDC |
| 28 | PP | COC oder COP | PCTFE |
| 29 | PET | | PET |
| 30 | PET | | PCTFE |
| 31 | PET | | PVDC |
| 32 | PSU | | PVC |
| 33 | PSU | | PET |
| 34 | PSU | | PP |
| 35 | PSU | COC oder COP | PP |
| 36 | PSU | PVC | PCTFE |
| 37 | PSU | PVC | PVDC |
| 38 | PSU | PET | PCTFE |

## Patentansprüche

1. Thermoformbares Laminat aus wenigstens zwei Kunststofffolien mit einer Bedruckung,
**dadurch gekennzeichnet, dass**
die Bedruckung zur Erhöhung der Fälschungssicherheit innerhalb des Laminates zwischen Kunststofffolien angeordnet ist.

2. Thermoformbares Laminat nach Anspruch 1, **dadurch gekennzeichnet, dass** das Laminat wie folgt aufgebaut ist:
- Folie A / Druck / Kaschiermittel / Folie C
- Folie A / Druck / Kaschiermittel / Folie B / Kaschiermittel / Folie C
- Folie A / Druck / Kaschiermittel / Folie B/ Kaschiermittel / Druck / Folie C

3. Thermoformbares Laminat nach Anspruch 2, **dadurch gekennzeichnet, dass** die Folien A, B und/oder C thermoformbare Kunststofffolien oder Kombinationen dieser Kunststofffolien auf Basis von chlorierten Kohlenwasserstoffen, Chlor-Fluor-Kohlenwasserstoffen, Polyolefinen, Polyethylenterephthalaten, Polyacrylnitrilen, Cycloolefin-Copolymeren, Cycloolefin-Polymeren, Polysulfonen oder biologisch abbaubaren Kunststoffen sind.

4. Thermogeformter Behälter, insbesondere Blisterbodenteil, oder Becher aus einem thermoformbaren Laminat nach einem der vorangehenden Ansprüche.

5. Verwendung thermogeformter Behälter und Becher nach Anspruch 4 zur Verpackung von pharmazeutischen und medizinischen Produkten.
